# EUROPEAN PATENT APPLICATION

(11) **EP 4 503 264 A1**
(43) Date of publication of application: **05.02.2025**
(21) Application number: 23188741.5
(22) Date of filing: 31.07.2023
(51) Int. Cl.: H01M 10/613, H01M 10/6554, H01M 10/6556, H01M 10/6563, H01M 50/204

(54) **BATTERY SYSTEM WITH A PASSIVE THERMAL CONTROL SYSTEM**

(71) Applicant: Newfrey LLC, New Britain, CT 06053 (US)
(72) Inventor: WISSLING, Matthias, 35394 Gießen (DE); AKBARINIA, Alireza, 35394 Gießen (DE)
(74) Representative: SBD IPAdmin

(57) **Abstract**

A battery system comprises a battery pack with a plurality of battery cells, a cooling plate mounted to one or more of the battery cells, and a passive thermal control system. The passive thermal control system includes at least one compressed gas reservoir arranged to store a compressed gas and a heat activated regulator in fluid communication with the at least one compressed gas reservoir. The heat activated regulator is configured to release compressed gas from the at least one compressed gas reservoir adjacent to the cooling plate when the temperature of the battery pack exceeds a threshold temperature, whereby the released compressed gas expands and lowers the temperature of the cooler plate.

## Description

### FIELD

The present technology relates to the field of battery systems, specifically to thermal management and safety features for battery packs used in various applications, such as electric vehicles, consumer electronics, and energy storage systems. The technology focuses on addressing thermal runaway events and maintaining optimal operating temperatures for battery cells within the battery pack.

### BACKGROUND

Electric vehicles (EVs) have gained significant popularity in recent years due to their potential to reduce greenhouse gas emissions and reliance on fossil fuels. One component of an EV is its battery pack, which stores and supplies electrical energy to power the vehicle. Ensuring the safety and reliability of these battery packs is of utmost importance, as they can pose significant risks if not properly managed.

One of the primary concerns associated with EV battery packs is the risk of thermal runaway wherein a self-sustaining reaction can occur when a battery cell generates excessive heat due to internal or external factors. This heat can cause the temperature of the battery cell to rise rapidly, potentially leading to a chain reaction that affects neighbouring cells and results in catastrophic failure of the entire battery pack.

To mitigate the risk of thermal runaway, various thermal management systems have been developed to maintain the temperature of the battery pack within a safe operating range. Active thermal control systems, which typically involve the use of pumps, fans, or other components to circulate a coolant through the battery pack, have been widely adopted in the industry. However, these systems rely on electrical power from the battery pack to function, and in the event of a thermal runaway, the electrical power to the active thermal control system may be disconnected, rendering the cooling system non-functional. This lack of cooling can exacerbate the thermal runaway, leading to potential damage and increased risk of a battery fire.

Prior art, such as DE102013016797A1, discloses a method for mitigating thermal runaway in an EV battery which uses a compressed gas to act as a coolant. The compressed gas dissipates heat and prevents further escalation of the thermal runaway event. However, the thermal control system relies on electrical power from the battery pack during thermal runaway events.

### SUMMARY

According to a first aspect of the disclosure, a battery system is provided, comprising a battery pack with a plurality of battery cells, a cooling plate mounted to one or more of the battery cells, and a passive thermal control system. The passive thermal control system includes at least one compressed gas reservoir arranged to store a compressed gas and a heat activated regulator in fluid communication with the at least one compressed gas reservoir. The heat activated regulator is configured to release compressed gas from the at least one compressed gas reservoir adjacent to the cooling plate when the temperature of the battery pack exceeds a threshold temperature, whereby the released compressed gas expands and lowers the temperature of the cooler plate.

In some embodiments, the cooling plate may be mounted on the bottom of the battery pack. The cooling plate may comprise a first side facing the plurality of battery cells and a second side facing an internal surface of a housing. The battery system may further comprise a storage chamber positioned between the cooling plate and the housing, configured to receive the at least one compressed gas reservoir. The at least one compressed gas reservoir may be mounted adjacent to the second side of the cooling plate.

The heat activated regulator may be mounted in a wall of a gas reservoir housing of the at least one compressed gas reservoir and configured to release compressed gas when the temperature of the battery pack exceeds a threshold temperature in a range of 100°C to 150°C. The battery system may further comprise conduits in fluid communication between the at least one compressed gas reservoir and the cooling plate, configured to guide the released compressed gas. The compressed gas may comprise at least one of helium, argon, nitrogen, or carbon dioxide.

In some embodiments, the battery system may further comprise an active thermal control system configured to remove heat from the battery pack during operation, operable independently of the passive thermal control system. The active thermal control system may comprise a coolant flow path extending between a coolant inlet and a coolant outlet in the battery pack housing, in fluid communication with the plurality of battery cells.

The at least one compressed gas reservoir may comprise a plurality of compressed gas reservoirs distributed throughout the battery pack. The gas reservoir housing may be made of aluminium and / or steel. The heat activated regulator may be a heat sensitive plug, a burst disc mechanism, a heat activated valve, and / or a pressure release valve. The passive thermal control system may be configured to operate without electrical energy from the battery pack.

In some embodiments, the battery pack may be one of a plurality of battery packs in a battery module, comprising a battery module housing surrounding the plurality of battery packs. The compressed gas may be stored in the at least one compressed gas reservoir at a pressure in a range of 1 to 10 bar.

According to a second aspect of the disclosure, a method of controlling the temperature of a battery system is provided. The method comprises triggering the heat activated regulator when the temperature of the battery pack exceeds the threshold temperature, releasing compressed gas from the at least one compressed gas reservoir adjacent to the cooling plate, and cooling the cooler plate via the expanding gas to lower the temperature of the battery pack.

### BRIEF DESCRIPTION OF THE DRAWINGS

Examples are described in more detail below with reference to the appended drawings;
Figure 1 is a schematic side view of a battery pack with a passive thermal control system according to an example;
Figure 2 is a schematic side view of a battery pack with a passive thermal control system according to another example;
Figure 3 is a schematic side view of a battery pack with a passive thermal control system according to yet another example;
Figure 4 is a schematic side view of a battery module having a plurality of battery packs with a passive thermal control system according to an example;
Figure 5 is a schematic side view of a battery module having a plurality of battery packs with a passive thermal control system according to another example;
Figure 6 is a schematic side view of a battery pack with an active thermal control system and a passive thermal control system according to an example; and
Figure 7 is a flow diagram of a method of operating a passive thermal control system during a thermal runaway event.

### DETAILED DESCRIPTION

The detailed description set forth below provides information and examples of the disclosed technology with sufficient detail to enable those skilled in the art to practise the disclosure.

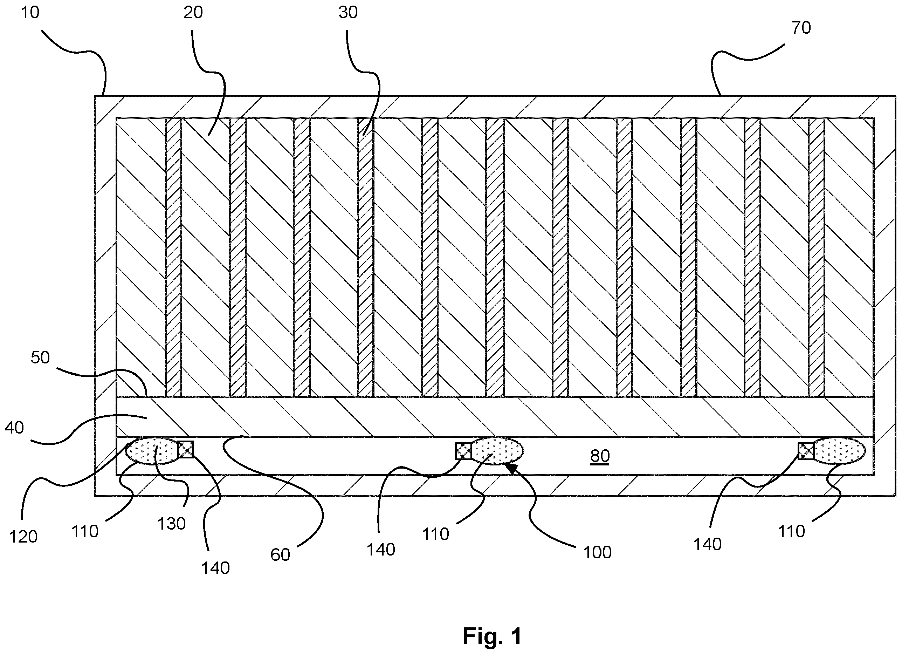

Figure 1 shows a schematic side view of a battery system having a battery pack 10 with a passive thermal control system 100 according to an example embodiment.

The battery pack 10 includes a plurality of battery cells 20, which are physically separated by cell separation elements 30. The battery pack 10 can comprise any suitable arrangement or configuration of battery cells 20. The battery pack 10 as shown in Figure 1 is a battery pack 10 for an electric vehicle (EV). In other examples, the battery pack 10 can be any suitable energy storage apparatus. For example, the battery pack 10 can be containerized or installed in a building.

The plurality of battery cells 20 as shown in Figure 1 are arranged in a specific configuration to maximise energy storage capacity and facilitate efficient heat dissipation. The battery cells 20 may be of various types, such as lithium-ion, nickel-metal hydride, or other suitable chemistries. The arrangement of the battery cells 20 can be optimised to provide the desired energy storage capacity, power output, and thermal management characteristics.

The cell separation elements 30 can be barriers or thermal fins that prevent direct contact between adjacent battery cells 20, reducing the risk of short circuits. In one example as shown in Figure 1, the battery pack 10 comprises cell separation elements 30 that are positioned between adjacent battery cells 20 to prevent direct contact and potential short circuits.

The cell separation elements 30 may be barriers or thermal fins that physically divide the individual cells within the battery pack 10. In some examples the cell separation elements 30 are in physical contact with one or more sides of the battery cells 20. The cell separation elements 30 may be made of a thermally conductive material, such as aluminium or copper or any other suitable conductive material e.g. graphite, to facilitate efficient heat transfer between the battery cells 20 and the cooler plate 40. The use of the cell separation elements 30 can help to maintain a uniform temperature distribution within the battery pack 10 and reduce the risk of thermal runaway events. The cell separation elements 30 may be made of a combination of a plate for instance with a high thermal conductive material and a thermal barrier or may consist only on a thermal barrier. The thermal barrier comprises for instance one intermediate plate and a plurality of spacer of both way of the plate such as to prevent or delay the thermal propagation between battery assemblies, and for example such as to avoid or reduce heat transfer from one cell to another cell in a thermal event. The thermal barrier may be made in a material such as mica or paper material.

In some examples, the cell separation elements 30 can be mounted on one or more surfaces of the battery cells 20. For example, the cell separate elements 30 are mounted on a top side, a bottom side and / or one or more of the side walls of the battery cells 20.

A cooler plate 40 is mounted on the bottom of the battery pack 10, with a first side 50 facing the plurality of battery cells 20 and a second side 60 facing the internal surface of a battery pack housing 70. The cooler plate 40 functions to dissipate heat away from the battery cells 20.

In some examples, the battery pack 10 includes a cooler plate 40 that is mounted on the bottom of the battery pack 10. As shown in Figure 1, the cooler plate 40 extends across the entire width of the battery pack 10. This means that the cooler plate 40 can optionally be in thermal contact with every battery cell 20 in the battery pack 10. The cooler plate 40 may be made of a thermally conductive material, such as aluminium or copper, to facilitate efficient heat transfer between the battery cells 20 and the cooler plate 40. The cooler plate 40 functions by dissipating heat away from the battery cells 20 from the first side 50 to the second side 60 of the cooler plate 40. This helps to maintain a uniform temperature distribution within the battery pack 10 and reduce the risk of thermal runaway events.

The first side 50 of the cooler plate 40 is in direct contact with the battery cells 20, allowing for efficient heat transfer between the battery cells 20 and the cooler plate 40. The second side 60 of the cooler plate 40 is optionally in contact with a battery pack housing 70, which may be designed to facilitate heat dissipation to the surrounding environment.

In some examples, the battery pack 10 includes a battery pack housing 70 that surrounds and protects the plurality of battery cells 20, the cell separation elements 30, and the cooler plate 40. The battery pack housing 70 may be made of a thermally conductive material, such as aluminium or steel, to facilitate efficient heat transfer between the battery pack 10 components and the surrounding environment. Alternatively, the battery pack housing 70 can be made of other materials such as plastic or carbon fibre. Indeed, the battery pack housing 70 can be a composite of one or more different materials. The battery pack housing 70 may also include features, such as vents or openings, to allow for air circulation and further enhance heat dissipation. The battery pack housing 70 may optionally be made of a durable material, such as metal or plastic, which provides structural support and protection for the internal components of the battery pack 10. The battery pack housing 70 may also include features that facilitate the mounting and integration of the battery pack 10 into a larger battery module 400 or system.

As shown in Figure 1, the battery pack housing 70 comprises a storage chamber 80 positioned between the bottom cooler plate 40 and the battery pack housing 70. The storage chamber 80 provides a space for receiving at least one compressed gas reservoir 110 that is part of a passive thermal control system 100. The storage chamber 80 may be designed to accommodate multiple compressed gas reservoirs 110, allowing for efficient cooling of the battery pack 10 during thermal runaway events. In this way, the storage chamber 80 provides a space for the compressed gas reservoir 110, allowing for efficient integration of the passive thermal control system 100 within the battery pack 10.

In some examples, the battery pack housing 70 may optionally comprise exhaust vents 270 that allow for the release of excess gas or pressure from the battery pack 10 during the cooling process. The exhaust vents 270 can help to maintain a safe operating environment within the battery pack 10 and prevent the build-up of potentially hazardous gases or pressures. The exhaust vents 270 may be positioned within the battery pack housing 70 to facilitate efficient gas release and minimise the risk of damage to the battery pack 10 components.

In order to cool the battery pack 10 during a thermal runaway event, the battery pack 10 comprises a passive thermal control system 100 as shown in Figure 1.

In one example, the passive thermal control system 100 is designed to provide efficient cooling to the battery pack 10 during a thermal runaway event or when the active thermal control system 150 is not operational. The passive thermal control system 100 operates independently of the active thermal control system 150 and does not require electrical energy from the battery pack 10 to function. This feature ensures that the passive thermal control system 100 can still provide cooling to the battery pack 10 even if the battery pack 10 is damaged or the active thermal control system 150 has failed.

The passive thermal control system 100 includes at least one compressed gas reservoir 110, which stores a compressed gas 130. As mentioned above, in some examples, the passive thermal control system 100 includes at least one compressed gas reservoir 110 arranged to store a compressed gas 130. The at least one compressed gas reservoir 110 may be mounted adjacent to the cooler plate 40, either on the first side 50 or the second side 60 of the cooler plate 40. Alternatively, the at least one compressed gas reservoir 110 may be mounted remote from the cooler plate 40 and in fluid communication with the cooler plate 40 via conduits. In some embodiments, multiple compressed gas reservoirs 110 can be distributed throughout the battery pack 10 to provide efficient cooling.

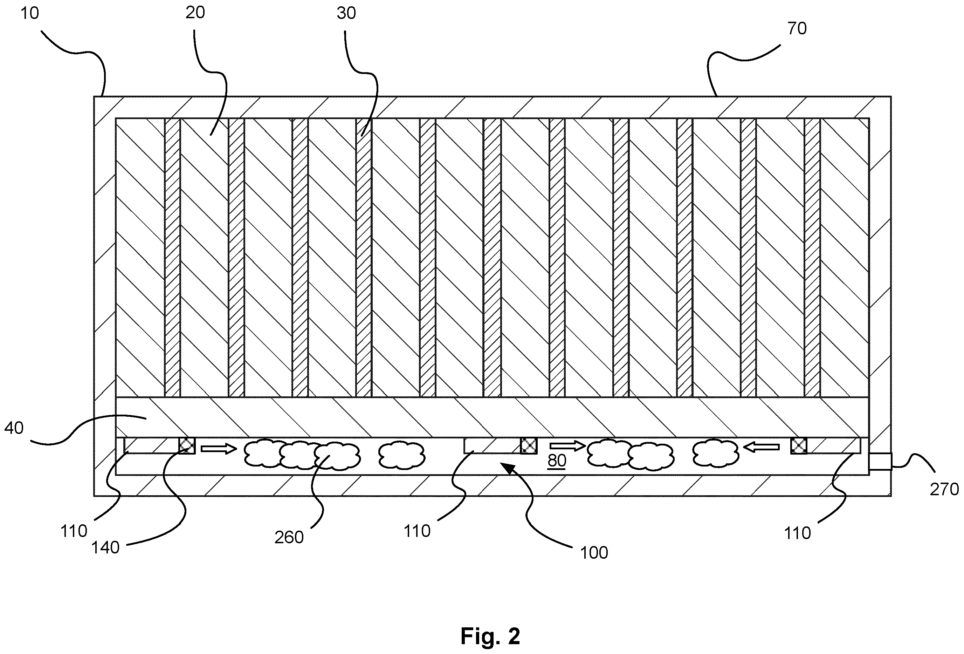

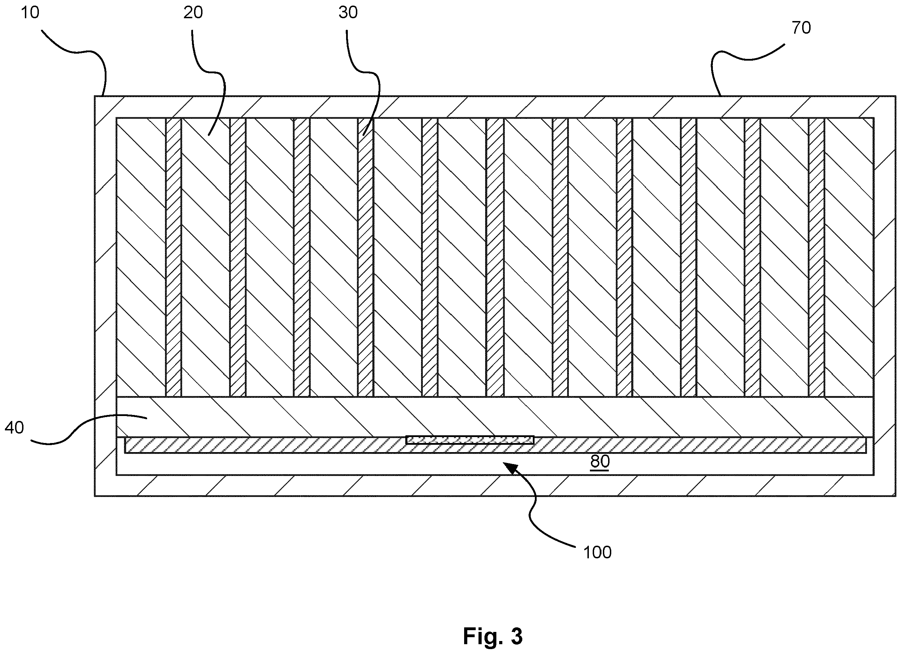

The compressed gas reservoir 110 is housed within a gas reservoir housing 120, which can be made of aluminium or steel. The gas reservoir housing 120 may have a cylindrical elongate shape (e.g., as shown in Figure 1), a flat elongate shape (e.g. as shown in Figure 2), or a flat planar elongate shape (e.g. as shown in Figure 3). Different forms of the compressed gas reservoir 110 can be seen in Figures 2, 3, and 4. In some embodiments, the gas reservoir housing 120 substantially covers the area of the cooler plate 40 on the second side 60 e.g., as shown in Figure 3. The gas reservoir housing 120 can be made of aluminium or steel to ensure containment of the compressed gas 130 and provide structural integrity.

The gas reservoir housing 120 as shown in Figure 1 comprises an elongate reservoir with an oval or circular cross section. An oval or circular cross section may be preferable because it may be structurally stronger to withstand the force exerted by the compressed gas 130.

The compressed gas 130 can be any suitable gas, such as helium, argon, nitrogen, or carbon dioxide, or a mixture of these or other gases. In other examples, the compressed gas 130 can be in the form of a gas mixture, such as a combination of nitrogen and helium. The compressed gas 130 may be stored in the at least one compressed gas reservoir 110 at a pressure in a range of 1 to 10 bar, with a preferred pressure range of 2 to 5 bar. Preferably, the compressed gas 130 is nitrogen since this is abundant and easily obtainable. The gas reservoir housing 120 is mounted adjacent to the second side 60 of the cooler plate 40.

A heat activated regulator 140 is mounted in the wall of the gas reservoir housing 120 and is in fluid communication with the compressed gas reservoir 110. The heat activated regulator 140 is configured to release compressed gas 130 from the compressed gas reservoir 110 when the temperature of the battery pack 10 exceeds a threshold temperature, such as in the range of 100°C to 150°C. The released compressed gas 130 expands and lowers the temperature of the cooler plate 40, thereby cooling the battery pack 10.

The battery pack 10 exceeding the threshold temperature is indicative of a thermal runaway event and/or the active thermal control system 150 has failed. The released compressed gas 130 expands and lowers the temperature of the cooler plate 40, thereby cooling the battery pack 10.

In some examples, the heat activated regulator 140 can be selected from various types of regulators, such as a heat sensitive plug, a burst disc mechanism, a heat activated valve, or a pressure release valve. In one embodiment, the heat activated regulator 140 may comprise a fusible barrier made of a thermoplastic material with a melt temperature in the range of 100°C to 150°C. This means that when the heat activated regulator 140 reaches the threshold temperature, e.g., 100°C, the heat activated regulator 140 e.g. melts and releases the compressed gas 130.

Figure 2 schematically shows the expanded gas 260 having been released into the storage chamber 80. Figure 2 shows a schematic side view of a battery system having a battery pack 10 with a passive thermal control system 100 according to another example embodiment. In this embodiment, the battery pack 10 is the same as shown in Figure 1 except that the gas reservoir housing 120 comprises a different shape e.g., an elongate reservoir with a rectangular cross section. A rectangular cross section may be preferable because it may be easier to mount to the flat cooler plate 40. This may be advantageous to ensure that the passive thermal control system 100 can be mounted to the battery pack 100 efficiently and easily.

Figures 1 and 2 show a plurality of different gas reservoir housing 120 mounted to the cooler plate 40. In some examples, this means that one or more of the gas reservoir housings 120 can be selectively actuated and release gas. For example, the battery pack 10 may have a localised hot spot in the battery pack 10 during a thermal runaway event. In this case, optionally only a gas reservoir housing 120 adjacent to the hot spot may release the compressed gas 130.

In some examples, conduits are provided in fluid communication between the at least one compressed gas reservoir 110 and the cooler plate 40. The conduits are configured to guide the release expanded gas 260 to the cooler plate 40. The conduits may be configured to guide the cold gas through the battery pack 10 to distribute the cooling effect. In one embodiment, the expanded gas 260 fills the storage chamber 80 and cools the cooler plate 40 by convection. This feature ensures efficient cooling of the battery pack 10 during a thermal runaway event or when the active thermal control system 150 is not operational.

Figure 3 shows a schematic side view of a battery pack 10 with a passive thermal control system 100 according to yet another example embodiment. In this embodiment, the battery system and the battery pack 10 is the same as shown in Figures 1 and 2 except that the gas reservoir housing 120 comprises a different shape In this embodiment, the gas reservoir housing 120 comprises an elongate and planar reservoir with a rectangular cross section. Since the gas reservoir housing 120 planar, the gas reservoir housing 120 covers almost all of the second side 60 of the cooler plate 40.

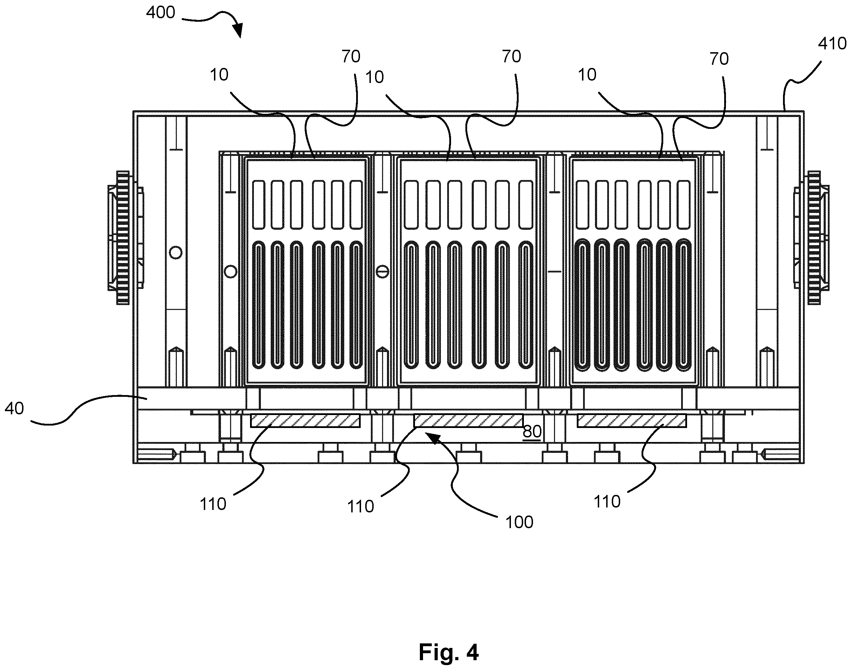

Figure 4 shows a schematic side view of a battery system having a battery module 400 having a plurality of battery packs 10 with a passive thermal control system 100 according to an example embodiment. The battery module 400 includes a battery module housing 410 that surrounds the plurality of battery packs 10. Each battery pack 10 includes a passive thermal control system 100 mounted to the cooler plate 40 as described in the previous embodiments. The cooler plate 40 as shown in Figure 4 is the same as shown with respect to the previous examples. However, the cooler plate 40 is configured to transfer heat away from a plurality of battery packs 10, each with a plurality of battery cells 20. In this case, the cooler plate 40 is common to all the battery packs 10.

In some examples, the battery module housing 410 is designed to provide structural support and protection for the plurality of battery packs 10 contained within. The battery module housing 410 may be made of a durable and thermally conductive material, such as aluminium or steel, to facilitate heat dissipation and maintain the structural integrity of the battery module 400 during operation.

The battery module housing 410 may be configured to accommodate a plurality of battery packs 10, each having a passive thermal control system 100 as described in the previous sections. The battery module housing 410 may be designed to allow for easy access to the individual battery packs 10 for maintenance, replacement, or inspection purposes.

In some examples, the battery module housing 410 may comprise additional features to enhance the thermal management capabilities of the battery module 400. For instance, the battery module housing 410 may include ventilation openings or exhaust vents 270 to facilitate the release of excess heat generated by the battery packs 10 during operation. Additionally, the battery module housing 410 may be designed to accommodate an active thermal control system 150 to provide further temperature management and cooling capabilities for the battery module 400.

The battery module housing 410 may also include provisions for electrical connections between the individual battery packs 10 and external systems, such as a battery management system or an electric vehicle's powertrain. These electrical connections may be configured to allow for efficient power transfer and communication between the battery packs 10 and the external systems.

In some examples, the battery module housing 410 may comprise a modular design, allowing for the easy addition or removal of battery packs 10 to adjust the overall capacity and performance of the battery module 400. This modular design may provide flexibility in configuring the battery module 400 to meet specific energy storage and power output requirements for various applications.

The battery module 400 configuration, comprising a battery module housing 410 enclosing a plurality of battery packs 10 with passive thermal control systems 100, offers several advantages. The integration of passive thermal control systems 100 within each battery pack 10 ensures efficient cooling and temperature management during operation and in the event of a thermal runaway, enhancing the safety and reliability of the battery module 400. battery packs 10 for maintenance, replacement, or inspection purposes.

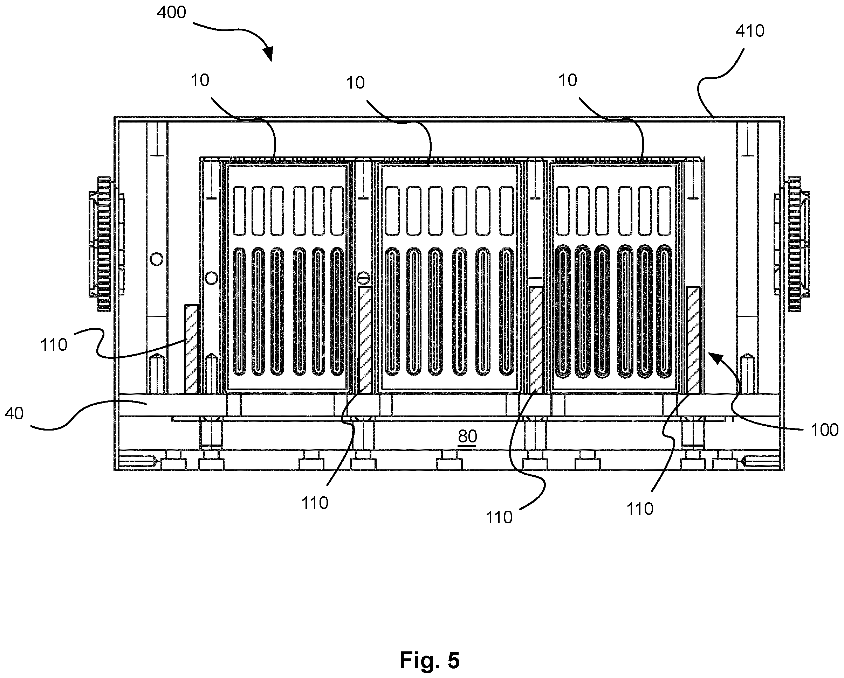

Figure 5 shows a schematic side view of a battery system having a battery module 400 having a plurality of battery packs 10 with a passive thermal control system 100 according to another example embodiment. The battery module 400 as shown in Figure 5 is the same as shown in Figure 4 except that the passive thermal control system 100 has a different configuration. In Figure 5 the gas reservoir housings 120 are mounted on the first side 50 of the cooler plate 40. Optionally the gas reservoir housing 120 is also mounted adjacent to the battery packs 10.

As mentioned above, optionally, the battery pack 10 or the battery modules 400 can additionally comprise an active thermal control system 150. That is, each of the examples described in reference to the Figures can additionally optionally comprise an active thermal control system 150.

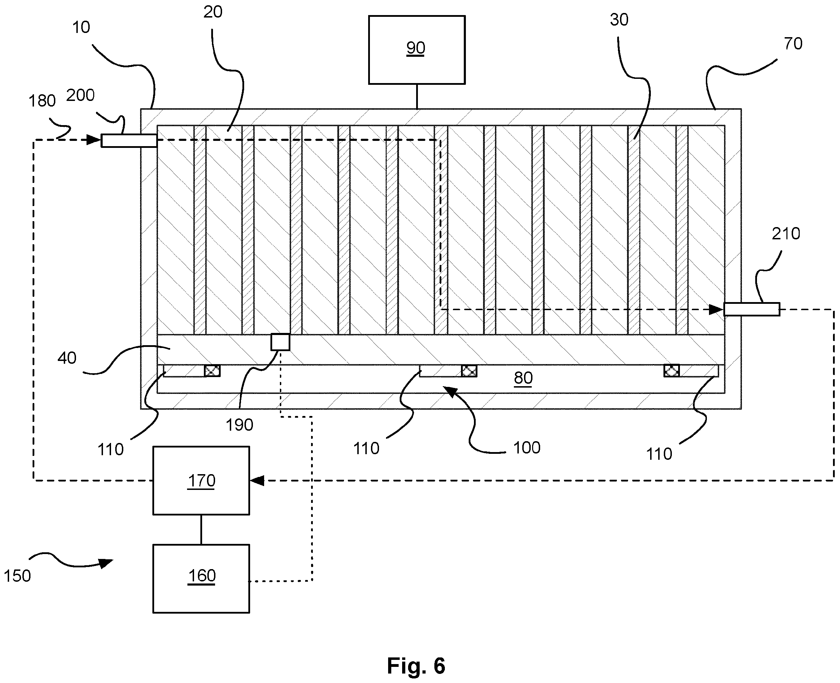

Figure 6 shows a schematic side view of a battery system having a battery pack 10 with an active thermal control system 150 and a passive thermal control system 100 according to an example embodiment. The active thermal control system 150 includes a coolant flow path 180 extending between a coolant inlet 200 and a coolant outlet 210 in the battery pack housing 70. The coolant flow path 180 is in fluid communication with the plurality of battery cells 20. The active thermal control system 150 operates independently of the passive thermal control system 100 and can be used to remove heat from the battery pack 10 during operation. Indeed, as mentioned above, if the active thermal control system 150 has a fault or becomes inoperable e.g. due to the thermal runaway event itself, the passive thermal control system 100 is still operational. In this case, the passive thermal control system 100 provides redundancy in the thermal management of the battery pack 10. The battery pack 10, may comprises a battery controller 90 configured to control the discharge and charging of the battery pack 10. The battery controller 90 is known and will not be discussed in any further detail.

This dual thermal management approach ensures that the battery pack 10 remains within safe operating temperatures, thereby prolonging the life of the battery cells 20 and improving the overall performance and safety of the battery system.

In some examples, the active thermal control system 150 includes an active thermal system control unit 160 responsible for managing and regulating the operation of the active thermal control system 150 in the battery apparatus. The control unit 160 may be configured to receive a temperature signal from one or more thermal sensors 190 positioned within the battery pack 10 or in close proximity to the battery cells 20. Based on the received temperature signal, the control unit 160 may control the operation of a pump 170 or a fan to circulate coolant through the battery pack 10 to remove heat

In some examples, the active thermal control system 150 comprises a coolant flow path 180 extending between a coolant inlet 200 and a coolant outlet 210 in the battery pack housing 70. The coolant flow path 180 is in fluid communication with the plurality of battery cells 20, allowing for efficient heat transfer between the battery cells 20 and the coolant. The coolant flow path 180 may be designed to optimise the flow of coolant through the battery pack 10 to ensure uniform cooling of the battery cells 20.

In some examples, the coolant inlet 200 and the coolant outlet 210 are positioned within the battery pack housing 70 to facilitate the flow of coolant through the battery pack 10. The coolant inlet 200 may be configured to introduce coolant into the battery pack 10, while the coolant outlet 210 may be configured to expel the heated coolant from the battery pack 10 after it has absorbed heat from the battery cells 20. The positioning of the coolant inlet 200 and the coolant outlet 210 may be optimised to ensure efficient heat transfer and uniform cooling of the battery cells 20.

In some examples, the active thermal control system 150 may utilise various types of coolants to remove heat from the battery pack 10. The choice of coolant may depend on factors such as the operating temperature range of the battery pack 10, the desired cooling performance, and the compatibility of the coolant with the materials used in the battery pack 10 and the active thermal control system 150.

In one example, the active thermal control system 150 may comprise a liquid coolant, such as water, which has a high heat capacity and can efficiently absorb and transfer heat from the battery cells 20. In another example, the active thermal control system 150 may comprise a gas coolant, such as air, which can be circulated through the battery pack 10 using a fan. In yet another example, the active thermal control system 150 may comprise a phase change material coolant, which absorbs heat by undergoing a phase change from a solid to a liquid state or from a liquid to a gas state. In a further example, the active thermal control system 150 may comprise a refrigerant coolant, which can absorb heat through a vapour-compression refrigeration cycle. In another example, the active thermal control system 150 may comprise a heat transfer fluid coolant, which can efficiently transfer heat from the battery cells 20 to a heat exchanger or another cooling device.

The use of different types of coolants in the active thermal control system 150 provides flexibility in designing battery systems with varying thermal management requirements and allows for the optimization of the cooling performance based on the specific needs of the battery system.

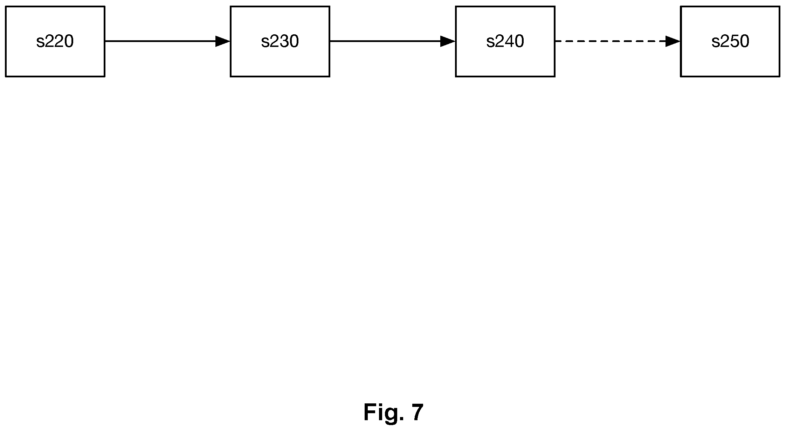

Operation of the passive thermal control system 100 will now be discussed with reference to Figure 7. In one example, the method of operating the passive thermal control system 100 during a thermal runaway event involves a series of steps designed to efficiently and effectively cool the battery pack 10 and prevent further damage or potential hazards.

Figure 7 shows a flow diagram of a method of operating a passive thermal control system 100 during a thermal runaway event. The method includes triggering the heat activated regulator 140 when the temperature of the battery pack 10 exceeds the threshold temperature as shown in step s220. The threshold temperature can be in a range of 100°C to 150°C, which is indicative of a thermal runaway event or the failure of the active thermal control system 150. The heat activated regulator 140 is mounted in the wall of the gas reservoir housing 120 and is in fluid communication with the compressed gas reservoir 110. By triggering the heat activated regulator 140, the compressed gas 130 is released from the compressed gas reservoir 110, initiating the cooling process as shown in step s230.

In step s230 the compressed gas 130 stored in the at least one compressed gas reservoir 110 is released adjacent to the cooling plate 40. When the compressed gas 130 is released, the expanded gas 260 expands and lowers the temperature of the expanded gas 260. The now expanded and cold gas is adjacent to the cooler plate 40 and cools the cooler plate 40 as shown in step s240. The cooler plate 40, in turn, dissipates heat away from the battery cells 20, thereby cooling the battery pack 10. This cooling process helps to prevent further damage to the battery cells 20 and reduces the risk of potential hazards associated with thermal runaway events.

The method may also optionally include guiding the cold gas through conduits attached to the cooler plate 40 to distribute the cooling effect as shown in s250.

The embodiments described above provide examples of the disclosed technology, and those skilled in the art will appreciate that various modifications, additions, and substitutions are possible without departing from the scope of the disclosure.

## Claims

1. A battery system comprising:
a battery pack (10) having a plurality of battery cells (20);
a cooling plate (40) mounted to one or more of the battery cells (20); and
a passive thermal control system (100) including:
at least one compressed gas reservoir (110) arranged to store a compressed gas (130); and
a heat activated regulator (140) in fluid communication with the at least one compressed gas reservoir (110),
wherein the heat activated regulator (140) is configured to release compressed gas (130) from the at least one compressed gas reservoir (110) adjacent to the cooling plate (40) when the temperature of the battery pack (10) exceeds a threshold temperature, whereby the released compressed gas (130) expands and lowers the temperature of the cooler plate (40).

2. The battery system according to claim 1, wherein the cooling plate (40) is mounted on a bottom of the battery pack (10).

3. The battery system according to claim 1 or 2, wherein the cooling plate (40) comprises a first side (50) facing the plurality of battery cells (20) and a second side (60) facing an internal surface of a housing (70).

4. The battery system according to any one of claims 1 to 3, further comprising a storage chamber (80) positioned between the cooling plate (40) and the housing (70), the storage chamber (80) being configured to receive the at least one compressed gas reservoir (110).

5. The battery system according to any one of claims 1 to 4, wherein the at least one compressed gas reservoir (110) is mounted adjacent to the second side (60) of the cooling plate (40).

6. The battery system according to any one of claims 1 to 5, wherein the heat activated regulator (140) is mounted in a wall of a gas reservoir housing (120) of the at least one compressed gas reservoir (110).

7. The battery system according to any one of claims 1 to 6, wherein the heat activated regulator (140) is configured to release compressed gas (130) when the temperature of the battery pack (10) exceeds a threshold temperature in a range of 100°C to 150°C.

8. The battery system according to any one of claims 1 to 7, further comprising conduits in fluid communication between the at least one compressed gas reservoir (110) and the cooling plate (40), the conduits being configured to guide the expanded gas (260).

9. The battery system according to any one of claims 1 to 8, wherein the compressed gas (130) comprises at least one of helium, argon, nitrogen, or carbon dioxide.

10. The battery system according to any one of claims 1 to 9, further comprising an active thermal control system (150) configured to remove heat from the battery pack (10) during operation, the active thermal control system (150) being operable independently of the passive thermal control system (100).

11. The battery system according to claim 10, wherein the active thermal control system (150) comprises a coolant flow path (180) extending between a coolant inlet (200) and a coolant outlet (210) in the battery pack housing (70), the coolant flow path (180) being in fluid communication with the plurality of battery cells (20).

12. The battery system according to any one of claims 1 to 11, wherein the at least one compressed gas reservoir (110) comprises a plurality of compressed gas reservoirs (110) distributed throughout the battery pack (10).

13. The battery system according to any one of claims 1 to 12, wherein the gas reservoir housing (120) is made of aluminium and / or steel.

14. The battery system according to any one of claims 1 to 13, wherein the heat activated regulator (140) is selected from a heat sensitive plug, a burst disc mechanism, a heat activated valve, and a pressure release valve.

15. The battery system according to any one of claims 1 to 14, wherein the passive thermal control system (100) is configured to operate without electrical energy from the battery pack (10).

16. The battery system according to any one of claims 1 to 15, wherein the battery pack (10) is one of a plurality of battery packs (10) in a battery module (400), the battery module (400) comprising a battery module housing (410) surrounding the plurality of battery packs (10).

17. The battery system according to any one of claims 1 to 16, wherein the compressed gas (130) is stored in the at least one compressed gas reservoir (110) at a pressure in a range of 1 to 10 bar.

18. A method of controlling the temperature of a battery system according to any one of claims 1 to 19, the method comprising:
triggering (s220) the heat activated regulator (140) when the temperature of the battery pack (10) exceeds the threshold temperature;
releasing (s230) compressed gas (130 from the at least one compressed gas reservoir (110) adjacent to the cooling plate (40); and
cooling (s240) the cooler plate (40) via the expanded gas (260) to lower the temperature of the battery pack (10).
